# EUROPÄISCHE PATENTSCHRIFT

(11) **EP 2 867 287 B1**
(45) Veröffentlichungstag und Bekanntmachung des Hinweises auf die Patenterteilung: **26.10.2016**
(21) Anmeldenummer: 13729257.9
(22) Anmeldetag: 05.06.2013
(51) Int. Cl.: C08K 5/00, C08K 5/103, C08K 5/12, C08L 71/02

(54) **MISCHUNGEN ENTHALTEND TRIMELLITSÄUREESTER UND POLYETHERPOLYOLESTER ALS WEICHMACHER, VERWENDUNG DIESER MISCHUNGEN ZUR HERSTELLUNG VON POLYMERCOMPOUNDS, UND PVC-WERKSTOFFE ENTHALTEND DIESE MISCHUNGEN**
MIXTURES CONTAINING TRIMELLITIC ACID ESTERS AND POLYETHER POLYOL ESTERS AS PLASTICISERS, USE FOR THE MANUFACTURE OF POLYMER COMPOUNDS, AND PVC MATERIALS CONTAINING SAME
MÉLANGES CONTENANT DES ESTERS TRIMELLITIQUES ET DU POLYESTER DE POLYÉTHERPOLYOL DESTINÉS À ÊTRE UTILISÉS COMME PLASTIFIANTS, UTILISATION DESDITS MÉLANGES POUR LA FABRICATION DE COMPOSITIONS POLYMÈRES, AINSI QUE MATÉRIAUX EN PCV CONTENANT CEUX-CI

(30) Priorität: 29.06.2012 DE 102012012942
(43) Veröffentlichungstag der Anmeldung: 06.05.2015
(73) Patentinhaber: OXEA GmbH, 46147 Oberhausen (DE)
(72) Erfinder: FREY, Guido, 64560 Riedstadt (DE); LANGE, Horst, 44879 Bochum (DE); STRUTZ, Heinz, 47445 Moers (DE); DE HAAS, Jacco, 47839 Krefeld (DE)
(86) Internationale Anmeldenummer: PCT/EP2013/001655
(87) Internationale Veröffentlichungsnummer: WO 2014/000856

(56) Entgegenhaltungen:
- EP-A1- 1 672 013
- EP-A1- 1 983 024
- WO-A2-2007/101968

## Beschreibung

Die vorliegende Erfindung betrifft Mischungen enthaltend Trimellitsäureester und Polyetherpolyolester als Plastifiziermittel, Verwendung der Mischungen zur Herstellung von Polymercompounds und PVC-Werkstoffe enthaltend diese Mischung.

Zur Herstellung von Halbzeugen und Fertigteilen aus Polyvinylchlorid werden in großem Umfang Plastifiziermittel eingesetzt, die üblicherweise nach dem Stand der Technik während eines Misch- und Erwärmungsvorgangs mit dem Polymergranulat zusammengegeben werden sodass das Polymergranulat sich entweder im Plastifiziermittel löst oder das Plastifiziermittel vom Polymergranulat aufgenommen wird. Das solcherart plastifizierte Polymer wird anschließend durch Extrusions- oder andere Verformungstechniken zu Halbzeugen oder Fertigprodukten weiterverarbeitet. Eine ausführliche Darstellung des Standes der Technik findet sich z. B. in Ch. E. Wilkes, J. W. Summers, Ch.A. Daniels; "PVC Handbook", Hanser-Verlag 2005. Die Effizienz der Plastifiziermittel wird üblicherweise an den verarbeitungstechnischen Eigenschaften, die sie während der Compoundierung zulassen sowie an den physikalisch-chemischen Eigenschaften des Werkstoffes nach der Verarbeitung gemessen. Wichtig sind z. B. eine niedrige Flüchtigkeit während der Verarbeitung zum Compound, schnelles Eindiffusionsvermögen in die Polymermatrix, gute thermische Stabilität mit Blick auf Resistenz gegenüber Zersetzung oder Verfärbung sowie ein gutes mechanisches Eigenschaftsprofil, in dem üblicherweise eine günstige Kombination von Reißfestigkeit, Härte und Biegefestigkeit verlangt wird. Zusätzlich können noch günstige Tieftemperatureigenschaften gefragt sein, wenn aus dem Werkstoff z.B. Formteile hergestellt werden, die beispielsweise in der Tieftemperaturtechnik eingesetzt werden. An Werkstoffe, die im Kontakt mit Lebensmitteln, in der Medizintechnik oder aber auch zur Herstellung von Kinderspielzeug eingesetzt werden, können weitere Anforderungen hinsichtlich der toxikologischen Eigenschaften der eingesetzten Verarbeitungshilfsmittel gestellt werden. Als Plastifiziermittel werden seit geraumer Zeit verschiedene Phthalsäureester eingesetzt, die den PVC-Werkstoffen ein günstiges Leistungsprofil bei niedrigen Herstellkosten verleihen und die daher zu den Universalweichmachern gerechnet werden. Hierzu gehören z. B. Dioctylphthalat (DOP), Diisononylphthalat (DINP) oder auch Diisodecylphthalat (DIDP). Mit speziellen Plastifiziermitteln ist es jedoch möglich gewisse erwünschte Eigenschaften, wie z. B. Tieftemperaturbiegefestigkeit oder -schlagzähigkeit, Temperaturbeständigkeit, Feuerbeständigkeit oder Migrationsresistenz zu beeinflussen. Zu diesen Spezialweichmachern gehören z.B. die Ester ein- oder dreibasischer aromatischer Carbonsäuren oder zwei- oder mehrbasischer aliphatischer Carbonsäuren.

Weiterhin ist bekannt, dass Universalweichmacher in Kombination mit sogenannten Extendern verarbeitet werden, um die Fertigungskosten der PVC-Bauteilherstellung zu reduzieren. Als Extender werden zum Beispiel Naphtha-basierte Kohlenwasserstoffe, aliphatische Kohlenwasserstoffe oder auch chlorierte Kohlenwasserstoffe eingesetzt, wobei letztere zusätzlich einen flammhemmenden Effekt ausüben. Derartige Extender besitzen in der Regel nur eine begrenzte Kompatibilität mit der PVC-Polymermatrix und neigen dazu, im Zuge von Alterungsprozessen aus dem Formteil herauszumigrieren oder sich im Formteil von der Polymermatrix zu entmischen. Resultat ist in der Regel eine unerwünschte Abgabe an die Umwelt wie auch eine unerwünschte Minderung der mechanischen Eigenschaften des Formteils, die sich in der Regel durch eine Versprödung bemerkbar macht.

Jedoch kommt es nicht nur bei den Extendern zu einer unerwünschten Entmischung und Migration aus dem PVC-Bauteil heraus, auch die Primärplastifiziermittel zeigen eine mehr oder weniger ausgeprägte Migrationsneigung, die im Laufe der Bauteilalterung zu einer unerwünschten Degradation der Werkstoffeigenschaften führen kann.

Die Gruppe der Phtalsäureester, die über lange Zeit als Plastifiziermittel in der PVC-verarbeitenden Industrie verwendet wurden und als deren Protagonist das Dioctylphthalat betrachtet werden kann, ist zudem seit längerer Zeit Gegenstand intensiver toxikologischer Untersuchungen, da vermutet wird, dass sie als sogenannte endokrine Disruptoren das menschliche Hormonsystem negativ beeinflussen können. Ihr möglicher Einfluss auf die menschliche Gesundheit hat zu intensiv geführten, kontroversen Diskussionen geführt, die z. B. in regulatorischen Verboten des Einsatzes von Dioctylphthalat in Weichspielzeug für Kleinkinder mündeten. Ebenso wurden verschiedene Phthalate aus kosmetischen Applikationen ausformuliert (vgl. zum Beispiel: M. Ittershagen, "Phthalates - Useful Plasticizers with undesired Properties", Statusreport 2007 des Umweltbundesamtes des Bundesministeriums für Umwelt, Naturschutz und Reaktorsicherheit der Bundesrepublik Deutschland). Die Diskussion um den Einfluss migrierender Weichmacher auf die Umwelt, die menschliche Gesundheit aber auch um die langfristige Gebrauchstüchtigkeit von PVC-Artikeln hat zu einem breiten Interesse an migrationsbeständigen, phthalatfreien Plastifiziermitteln geführt.

Es besteht daher in der Industrie ein ungebrochen großes Interesse an Plastifiziermitteln, die eine günstige Kombination von verarbeitungstechnischen Eigenschaften während der Compoundierung sowie der Formteilherstellung, wie gute Wärme-, Migrations- und Elutionsresistenz besitzen, die Herausbildung spezifischer Produkteigenschaften wie günstige Tieftemperatureigenschaften erlauben und zudem ein günstiges toxikologisches Profil aufweisen.

Um ein ausgewogenes Eigenschaftsprofil für das verwendete Plastifiziermittel zu erzielen, werden auch Mischungen verschiedener Primärweichmacher eingesetzt. WO 2007/144831 A2 offenbart flexible Schläuche für den Transport von flüssigen Lebensmitteln. Um auf der einen Seite eine ausreichende Flexibilität des Schlauches sicherzustellen aber auf der anderen Seite die Migration der Hilfsmittel in das Lebensmittelgut möglichst geringzuhalten, werden beispielsweise Mischungen aus Trimellitaten und Adipaten oder Mischungen aus monomeren und polymeren Adipaten als Weichmacher verwendet. Nach WO 2012/075164 A2 wird PVC-Plastisol nach der Sprühtechnik in Weich-PVC-Artikel verarbeitet, wobei als Weichmacher eine Mischung aus Trimellitaten und einem zweiten Weichmacher wie Adipaten oder Sebacaten eingesetzt wird.

EP 1 672 013 A1 offenbart Estermischungen enthaltend eine Mischung von Veresterungsprodukten aus Polyetherpolyolen und aromatischer Monocarbonsäuren und aliphatischen Monocarbonsäuren. Zusätzlich kann auch noch Tri-(2-ethylhexyl)-trimellitat als weiterer Weichmacher zugegen sein.

Aus EP 1 983 024 A1 sind Estermischungen bekannt, die Alkylbenzylester aromatischer Tri- und Tetracarbonsäuren und Polybenzylester aromatischer Tri- und Tetracarbonsäuren enthalten. Als weiterer Weichmacher kann auch noch Trioctyltrimellitat vorliegen. WO 2007/101968 A2 betrifft mit Trioctyltrimellitat weichgestellte PVC-Massen.

Die bekannten trimellitsäureesterhaltigen Weichmachermischungen müssen nicht in jedem Fall für das geforderte Anwendungsgebiet des Kunststoffartikels die optimale Lösung bedeuten, so dass stets verbesserte Weichmachermischungen nachgefragt werden.

Überraschenderweise wurde gefunden, dass ein derartiges Anforderungsprofil von Mischungen aus Trimellitsäureestern und Polyetherpolyolestern erfüllt werden kann.

Die vorliegende Erfindung betrifft daher eine Mischung aus Trimellitsäureestern und Polyetherpolyolestern, dadurch gekennzeichnet, dass die Mischung von 10 bis 90 Gew.-% Trimellitsäureester und 90 bis 10 Gew.-% Polyetherpolyolester enthält, wobei die Polyetherpolyolester sich von linearen oder verzweigten, aliphatischen Monocarbonsäuren mit 3 bis 20 Kohlenstoffatomen im Molekül ableiten lassen.

Vorzugsweise enthält die Mischung 40 bis 60 Gew.-% Trimellitsäurester und 60 bis 40 Gew.-% Polyetherpolyolester.

Unter dem Begriff "Mischung" wird die Weichmachermischung oder Plastifiziermittelmischung verstanden, die Trimellitsäureester und Polyetherpolyolester enthält, sowie gegebenenfalls noch weitere Weichmacher, wie Adipinsäureester, Sebacinsäureester, Azelainsäureester oder Polyester. Vorzugsweise besteht jedoch die Mischung ausschließlich aus dem Trimellitsäurester und dem Polyetherpolyolester.

Unter Trimellitsäurester werden beispielsweise Tri-(2-ethylhexyl)trimellitat, Tri-(n-octyl,-n-decyl)trimellitat, Tri-(heptyl, nonyl)trimellitat, Tri-(n-octyl)trimellitat, Tri-(iso-nonyl)trimellitat oder Tri-(iso-decyl)trimellitat und ihre Mischungen verstanden. Besonders bevorzugt enthält die Mischung Tri-(2-ethylhexyl)trimellitat. Die Herstellung von Trimellitsäureestern wird großtechnisch betrieben (Ullmann's Encyclopedia of industrial Chemistry, Wiley-VCH, 6th. Edition, 2003, Vol. 27, Seiten 219-220)

Polyetherpolyolester enthalten als Alkoholkomponente Etherdiole, beispielsweise Diethylenglykol, Triethylenglykol, Tetraethylenglykol, höhere Polyethylenglykole, 1,2-Propylenglykol oder höhere Propylenglykole. Ihre Herstellung erfolgt durch Umsetzung des Etherdiols und Säure gegebenenfalls in Gegenwart saurer Katalysatoren. Ihre Herstellung wird beispielsweise in DE 102009048771 A1, DE 102009048772 A1 und DE 102009048775 A1 beschrieben.

Unter den Etherdiolen sind besonders solche Etherdiole geeignet, die der allgemeinen Formel (I) genügen

H-(-O-[-CR¹R²-]ₘ-)ₒ-OH (I)

in der R¹ und R² unabhängig voneinander Wasserstoff, einen Alkylrest mit 1 bis 5 Kohlenstoffatomen, vorzugsweise Methyl, Ethyl oder Propyl, m eine ganze Zahl von 1 bis 10, vorzugsweise 1 bis 8 und insbesondere 1, 2, 3 oder 4, o eine ganze Zahl von 2 bis 15, vorzugsweise 2 bis 8 und insbesondere 2, 3, 4 oder 5 bedeuten.

Geeignete Etherdiole sind Di-, Tri- und Tetraethylenglykol oder Dipropylenglykol, Tripropylenglykol oder Tetrapropylenglykol. Ihre Herstellung ist beispielsweise aus Weissermel, Arpe, Industrielle Organische Chemie, VCH 1988, 3. Auflage, Seiten 159 bis 162; Seiten 294 bis 295 bekannt.

Die Etherdiole werden mit linearen oder verzweigten, aliphatischen Monocarbonsäuren mit 3 bis 20 Kohlenstoffatomen im Molekül zu Polyetherpolyolestern verestert. Beispiele für aliphatische Monocarbonsäuren als Bausteine der Polyetherpolyolester sind Propionsäure, n-Buttersäure, Isobuttersäure, n-Pentansäure, 2-Methylbuttersäure, 3-Methylbuttersäure, 2-Methylpentansäure, n-Hexansäure, 2-Ethylbuttersäure, n-Heptansäure, 2-Methylhexansäure, Cyclohexancarbonsäure, 2-Ethylhexansäure, n-Nonansäure, 2-Methyloctansäure, Isononansäure, 3,5,5-Trimethylhexansäure, 2-Propylheptansäure, 2-Methylundecansäure, Isoundecancarbonsäure, Tricyclodecancarbonsäure und Isotridecancarbonsäure.

Als besonders geeignete Polyetherpolyolester haben sich Triethylenglykol-di-2-ethylhexanoat, Tetraethylenglykol-di-n-heptanoat, Triethylenglykol-di-2-ethylbutyrat, Triethylenglykol-di-n-heptanoat oder Tetraethylenglykol-di-2-ethylhexanoat erwiesen.

In einer besonders bevorzugten Ausführungsform enthält die Mischung Triethylenglykol-di-2-ethylhexanoat als Polyetherpolyolester.

So reichen bereits geringe Zusatzmengen von Polyetherpolyolestern zu Trimellitsäureestern aus, um die relativ hohe Viskosität der Trimellitsäureester zu senken und damit die Eincompoundierung in das Polymercompound, vorzugsweise in die PVC-Matrix zu erleichtern. Unerwarteterweise bleibt die Migrationsneigung des Stoffgemisches auf dem günstigen, sehr niedrigen Niveau der Trimellitsäureester, was sich in einem günstigen Elutionsverhalten, einer niedrigen Volatilität während thermischer Auslagerung sowie günstigen mechanischen Eigenschaften des Polymercompounds äußert.

Als ganz besonders geeignet hat sich als Weichmachermischung eine Mischung erwiesen, die aus Tri-(2-ethylhexyl)trimellitat und Triethylenglykoldi-2-ethylhexanoat besteht. Durch die Wahl des Mischungsverhältnisses kann die Viskosität der Mischung auf den erforderlichen Wert gezielt eingestellt werden, um die Verarbeitung des Polymercompounds zu erleichtern. Für eine aus Tri-(2-ethylhexyl)trimellitat und Triethylenglykol-di-2-ethylhexanoat bestehende Mischung werden bei 20°C folgende Viskositätswerte ermittelt:

| Gehalt an Tri-(2-ethylhexyl)trimellitat in der Gesamtmischung | |
|---|---|
| m [%] | η Viskosität der Mischung [mm²/s] |
| 0 | 16,9 |
| 10,91 | 20,2 |
| 16,53 | 27,3 |
| 42,17 | 38,7 |
| 50 | 47,728 |
| 51 | 49,63 |
| 64,05 | 71,2 |
| 74 | 100,9 |
| 79,68 | 124 |
| 84 | 147,63 |
| 84,5 | 149,9 |
| 100 | 297,6 |

Neben der Mischung werden für die Herstellung von Polymercompounds weitere Additive verwendet, die dem Fachmann an sich bekannt sind, wie Gleitmittel, Stabilisatoren, Antioxidantien und Füllmittel. Als Polymercompounds können unter Verwendung der erfindungsgemäßen Weichmachermischung insbesondere PVC-Compounds hergestellt werden, aus denen weiterhin PVC-Werkstoffe gefertigt werden können.

Im Folgenden wird der Erfindungsgedanke anhand einer Beschreibung der Herstellung von PVC-Compounds auf Basis einer industrieüblichen Rahmenrezeptur illustriert, wobei Mischungen aus Tri-(2-ethylhexyl)trimellitat und Triethylenglykol-di-2-ethylhexanoat in jeweils zwei unterschiedlichen Konzentrationen eingesetzt werden ohne dass damit jedoch eine besonders bevorzugte Ausführungsform festgeschrieben werden soll.

### Rezepturzusammensetzung R-1

| | Probe I-1 | Probe I-2 |
|---|---|---|
| | Anteil | Anteil |
| PVC Vinnolit S 4170 | 100 | 100 |
| Mischung A | 50 | 67 |
| Calciumcarbonat Omya BSH | 30 | 30 |
| Sojaöl Drapex 39 | 5 | 5 |
| Baerostab UBZ 780 | 2 | 2 |

Mischung A besteht aus einem Gemisch von 51 Gew.-% Tri-(2-ethylhexyl)trimellitat und 49 Gew.-% Triethylenglykol-di-2-ethylhexanoat.

### Rezepturzusammensetzung R-2

Zusammensetzung wie unter R-1, jedoch Einsatz eines Gemisches aus 84,5 Gew.-% Tri-(2-ethylhexyl)trimellitat und 15,5 Gew.-% Triethylenglykol-di-2-ethylhexanoat (Mischung B).

Alle Polymerblends wurden mit einem Heiz-Kühlmischer FML 10/KM23 der Fa. Reimelt Henschel Mischsysteme hergestellt. Die aufbereiteten Blends ließen sich problemlos mit einem Doppelschneckenextruder (Arbeitstemperaturen 140 - 160 °C) mit Flachfolienabzug (Maschinentyp CR 72T, Fa. Dr. Collin) zu 100 mm breiten und 0,3 bis 1,2 mm dicken Folien verarbeiten.

Aus den Folien wurden durch Warmpressen (Pressentyp P 300 P/M, Fa. Dr. Collin) Platten mit den Dimensionen 145 x 145 x 3 mm hergestellt aus denen Prüfstäbe für die Zugprüfung gestanzt wurden.

Die erhaltenen Folien wurden anhand folgender Prüfungen charakterisiert:

| | |
|---|---|
| Härte n. ASTM D2240 | Standard Test for Rubber Property Durometer Hardness |
| Zugfestigkeit n. ASTM D638 | Standard Test Method for Tensile Properties of Plastics |
| Steifigkeit n. ASTM D1043 | Standard Test Method for Stiffness Properties of Plastics as a Function of Temperature by Means of a Torsion Test |
| Chemikalienbeständigkeit n. ASTM D1239 | Standard Test Method for Resistance of Plastic Films to Extraction by Chemicals. Als Extraktionsmedien wurden Seifenlauge und Öl eingesetzt |
| Test auf Flüchtige n. ASTM D2369 | Standard Test Method for Volatile Content of Coatings |
| Fogging-Zahl n. DIN 75201 | |

Migrationsverhalten bei Warmlagerung über 7 Tage / 100°C in Anlehnung an DIN 53508

### Vergleichsbeispiele

Als Kontrollexperimente wurden jeweils analoge Rezepturen, dabei jedoch mit 100 % Tri-(2-ethylhexyl)trimellitat, R-3, sowie mit 100% Triethylenglykoldi-2-ethylhexanoat, R-4, hergestellt und verarbeitet.

Die Ergebnisse sind in Tabelle 1 zusammengestellt:

**Tabelle 1: Anwendungstechnische Kenndaten der mit den Rezepturen R-1 bis R-4 weichgestellten PVC-Prüfstäbe; Gehalt von 50 phr Estergemisch**

| | R-1 | R-2 | R-3 | R-4 |
|---|---|---|---|---|
| Härte (Shore A) | 83 | 84 | 88 | 81 |
| Zugfestigkeit (MPa) | 18,9 | 19,0 | 12,8 | 16,2 |
| Glasübergangstemperatur °C | -37 | -24 | -20 | -58 |
| Extraktionsbeständigkeit | | | | |
| - Weissöl | 3,0 | 1,2 | 10 | 10 |
| - 1-%ige Seifenlauge | 1,2 | 0,4 | 0,1 | 3 |
| Foggingzahl*) | 71 | 84 | 97 | 34 |
| Masseverlust bei Warmlagerung 7d/100 °C (%) | 4,4 | 1,9 | 1,1 | 6,5 |

| | | | | |
|---|---|---|---|---|
| *) Die Foggingzahl wurde gemäß DIN 75201 an einem Compound mit einem Gehalt von 67 phr Estergemisch ermittelt. | | | | |

## Patentansprüche

1. Mischung enthaltend Trimellitsäureester und Polyetherpolyolester, **dadurch gekennzeichnet, dass** die Mischung von 10 bis 90 Gew.-% Trimellitsäureester und 90 bis 10 Gew.-% Polyetherpolyolester enthält, wobei die Polyetherpolyolester sich von linearen oder verzweigten, aliphatischen Monocarbonsäuren mit 3 bis 20 Kohlenstoffatomen im Molekül ableiten lassen.

2. Mischung gemäß Anspruch 1, **dadurch gekennzeichnet, dass** Trimellitsäureester ausgewählt werden aus Tri-(2-ethylhexyl)trimellitat, Tri-(n-octyl, n-decyl)trimellitat, Tri-(heptyl, nonyl)trimellitat, Tri-(n-octyl)trimellitat, Tri-(iso-nonyl)trimellitat, Tri-(iso-decyl)trimellitat oder deren Mischungen.

3. Mischung gemäß Anspruch 1 oder 2, **dadurch gekennzeichnet, dass** die Polyetherpolyolester sich von Etherdiolen der allgemeinen Formel (I) ableiten lassen
H-(-O-[-CR¹R²-]ₘ-)ₒ-OH (I)
in der R¹ und R² unabhängig voneinander Wasserstoff, einen Alkylrest mit 1 bis 5 Kohlenstoffatomen, m eine ganze Zahl von 1 bis 10, o eine ganze Zahl von 2 bis 15, bedeuten.

4. Mischung gemäß Anspruch 3, **dadurch gekennzeichnet, dass** es sich bei den Etherdiolen gemäß Formel (I) um Diethylenglykol, Triethylenglykol, Tetraethylenglykol, Dipropylenglykol, Tripropylenglykol oder Tetrapropylenglykol handelt.

5. Mischung gemäß Anspruch 1, **dadurch gekennzeichnet, dass** es sich bei den Monocarbonsäuren um Propionsäure, n-Buttersäure, Isobuttersäure, n-Pentansäure, 2-Methylbuttersäure, 3-Methylbuttersäure, 2-Methylpentansäure, n-Hexansäure, 2-Ethylbuttersäure, n-Heptansäure, 2-Methylhexansäure, Cyclohexancarbonsäure, 2-Ethylhexansäure, n-Nonansäure, 2-Methyloctansäure, Isononansäure, 3,5,5-Trimethylhexansäure, 2-Propylheptansäure, 2-Methylundecansäure, Isoundecancarbonsäure, Tricyclodecancarbonsäure oder Isotridecancarbonsäure handelt.

6. Mischung gemäß einem oder mehreren der Ansprüche 1 bis 5, **dadurch gekennzeichnet, dass** es sich bei dem Polyetherpolyolester um Triethylenglykol-di-2-ethylhexanoat, Tetraethylenglykol-di-n-heptanoat, Triethylenglykol-di-2-ethylbutyrat, Triethylenglykol-di-n-heptanoat oder Tetraethylenglykol-di-2-ethylhexanoat handelt.

7. Mischung gemäß einem oder mehreren der Ansprüche 1 bis 6, **dadurch gekennzeichnet, dass** die Mischung aus Tri-(2-ethylhexyl)trimellitat und Triethylenglykol-di-2-ethylhexanoat besteht.

8. PVC-Werkstoffe enthaltend die Mischung gemäß einem oder mehreren der Ansprüche 1 bis 7.

9. PVC-Werkstoffe nach Anspruch 8, **dadurch gekennzeichnet, dass** sie eine Glasübergangstemperatur von < 20°C besitzen.

10. PVC-Werkstoffe nach Anspruch 8, **dadurch gekennzeichnet, dass** sie eine Fogging-Zahl von mindestens 60 haben.

11. Verwendung der Mischung gemäß einem oder mehreren der Ansprüche 1 bis 7 zur Herstellung von Polymercompounds, Masterbatches, Halbzeugen oder Fertigteilen.

12. Verwendung nach Anspruch 11, wobei die Polymercompounds einen Härte Shore A < 90 aufweisen.

## Claims

1. Mixture comprising trimellitic esters and polyether polyol esters, **characterized in that** the mixture comprises from 10 to 90% by weight of trimellitic esters and 90 to 10% by weight of polyether polyol esters, wherein the polyether polyol esters can be derived from linear or branched, aliphatic monocarboxylic acids having 3 to 20 carbon atoms in the molecule.

2. Mixture according to Claim 1, **characterized in that** trimellitic esters are selected from tri(2-ethylhexyl) trimellitate, tri(n-octyl, n-decyl) trimellitate, tri(heptyl, nonyl) trimellitate, tri(n-octyl) trimellitate, tri(isononyl) trimellitate, tri(isodecyl) trimellitate or mixtures thereof.

3. Mixture according to Claim 1 or 2, **characterized in that** the polyether polyol esters can be derived from ether diols of the general formula (I)
H-(-O-[-CR¹R²-]ₘ-)ₒ-OH (I)
in which R¹ and R² are each independently hydrogen, an alkyl radical having 1 to 5 carbon atoms, m is an integer from 1 to 10, o is an integer from 2 to 15.

4. Mixture according to Claim 3, **characterized in that** the ether diols of the formula (I) are diethylene glycol, triethylene glycol, tetraethylene glycol, dipropylene glycol, tripropylene glycol or tetrapropylene glycol.

5. Mixture according to Claim 1, **characterized in that** the monocarboxylic acids are propionic acid, n-butyric acid, isobutyric acid, n-pentanoic acid, 2-methylbutyric acid, 3-methylbutyric acid, 2-methylpentanoic acid, n-hexanoic acid, 2-ethylbutyric acid, n-heptanoic acid, 2-methylhexanoic acid, cyclohexanecarboxylic acid, 2-ethylhexanoic acid, n-nonanoic acid, 2-methyloctanoic acid, isononanoic acid, 3,5,5-trimethylhexanoic acid, 2-propylheptanoic acid, 2-methylundecanoic acid, isoundecanecarboxylic acid, tricyclodecanecarboxylic acid or isotridecanecarboxylic acid.

6. Mixture according to one or more of Claims 1 to 5, **characterized in that** the polyether polyol ester is triethylene glycol di-2-ethylhexanoate, tetraethylene glycol di-n-heptanoate, triethylene glycol di-2-ethylbutyrate, triethylene glycol di-n-heptanoate or tetraethylene glycol di-2-ethylhexanoate.

7. Mixture according to one or more of Claims 1 to 6, **characterized in that** the mixture consists of tri(2-ethylhexyl) trimellitate and triethylene glycol di-2-ethylhexanoate.

8. PVC materials comprising the mixture according to one or more of Claims 1 to 7.

9. PVC materials according to Claim 8, **characterized in that** they have a glass transition temperature of < 20°C.

10. PVC materials according to Claim 8, **characterized in that** they have a fogging number of at least 60.

11. Use of the mixture according to one or more of Claims 1 to 7 for production of polymer compounds, masterbatches, semifinished products or finished products.

12. Use according to Claim 11, wherein the polymer compounds have a Shore A hardness of < 90.

## Revendications

1. Mélange contenant des esters de l'acide trimellitique et des polyétherpolyolesters, **caractérisé en ce que** le mélange contient de 10 à 90 % en poids d'esters de l'acide trimellitique et 90 à 10 % en poids de polyétherpolyolesters, les polyétherpolyolesters dérivant d'acides monocarboxyliques aliphatiques à chaîne droite ou ramifiée, ayant 3 à 20 atomes de carbone dans leur molécule.

2. Mélange selon la revendication 1, **caractérisé en ce que** les esters de l'acide trimellitique sont choisis parmi le trimellitate de tri(2-éthylhexyle), le trimellitate de tri(n-octyle, n-décyle), le trimellitate de tri(heptyle, nonyle), le trimellitate de tri(n-octyle), le trimellitate de tri(iso-nonyle), le trimellitate de tri(iso-décyle) ou les mélanges de ceux-ci.

3. Mélange selon la revendication 1 ou 2, **caractérisé en ce que** les polyétherpolyolesters dérivent d'étherdiols de formule générale (I)
H-(-O-[-CR¹R²-]ₘ-)ₒ-OH (I)
dans laquelle R¹ et R² représentent chacun indépendamment de l'autre un atome d'hydrogène, un radical alkyle ayant 1 à 5 atomes de carbone, m est un nombre entier de 1 à 10, o est un nombre entier de 2 à 15.

4. Mélange selon la revendication 3, **caractérisé en ce que**, pour ce qui concerne les étherdiols de formule (I), il s'agit du diéthylèneglycol, du triéthylèneglycol, du tétraéthylèneglycol, du dipropylèneglycol, du tripropylèneglycol ou du tétrapropylèneglycol.

5. Mélange selon la revendication 1, **caractérisé en ce que**, pour ce qui concerne les acides monocarboxyliques, il s'agit de l'acide propionique, de l'acide n-butyrique, de l'acide isobutyrique, de l'acide n-pentanoïque, de l'acide 2-méthylbutyrique, de l'acide 3-méthylbutyrique, de l'acide 2-méthylpentanoïque, de l'acide n-hexanoïque, de l'acide 2-éthylbutyrique, de l'acide n-heptanoïque, de l'acide 2-méthylhexanoïque, de l'acide cyclohexanecarboxylique, de l'acide 2-éthylhexanoïque, de l'acide n-nonanoïque, de l'acide 2-méthyloctanoïque, de l'acide isononanoïque, de l'acide 3,5,5-triméthylhexanoïque, de l'acide 2-propylheptanoïque, de l'acide 2-méthylundécanoïque, de l'acide isoundécanecarboxylique, de l'acide tricyclodécanecarboxylique ou de l'acide isotridécanecarboxylique.

6. Mélange selon l'une ou plusieurs des revendications 1 à 5, **caractérisé en ce que**, pour ce qui concerne le polyétherpolyolester, il s'agit du di-2-éthylhexanoate de triéthylèneglycol, du di-n-heptanoate de tétraéthylèneglycol, du di-2-éthylbutyrate de triéthylèneglycol, du di-n-heptanoate de triéthylèneglycol ou du di-2-éthylhexanoate de tétraéthylèneglycol.

7. Mélange selon l'une ou plusieurs des revendications 1 à 6, **caractérisé en ce que** le mélange est constitué de trimellitate de tri(2-éthylhexyle) et de di-2-éthylhexanoate de triéthylèneglycol.

8. Matériaux de PVC, contenant le mélange selon l'une ou plusieurs des revendications 1 à 7.

9. Matériaux de PVC selon la revendication 8, **caractérisés en ce qu'**ils ont une température de transition vitreuse < 20°C.

10. Matériaux de PVC selon la revendication 8, **caractérisés en ce qu'**ils ont un index de fogging d'au moins 60.

11. Utilisation du mélange selon l'une ou plusieurs des revendications 1 à 7 pour fabriquer des mélanges de polymères, des mélanges-maîtres, des semi-produits ou des pièces finies.

12. Utilisation selon la revendication 11, dans laquelle les composés polymères présentent une dureté Shore A < 90.
